Europäisches Patentamt

European Patent Office

Office européen des brevets

(19)

(11) Publication number: **0 014 291**
**B 1**

(12) # EUROPEAN PATENT SPECIFICATION

(45) Date of publication of patent specification: 09.02.83

(21) Application number: 79302894.5

(22) Date of filing: 14.12.79

(51) Int. Cl.³: **B 01 J 29/32,**
**C 10 G 47/16,**
**C 10 G 11/05,**
**C 10 G 35/095, C 08 F 4/02**

(54) **Sulfur- and nitrogen-containing hydrocarbon feed conversion and catalyst therefor.**

(30) Priority: 22.01.79 US 5066

(43) Date of publication of application:
20.08.80 Bulletin 80/17

(45) Publication of the grant of the patent:
09.02.83 Bulletin 83/6

(84) Designated Contracting States:
BE DE FR GB IT NL

(56) References cited:
US - A - 3 269 934
US - A - 4 021 331

(73) Proprietor: MOBIL OIL CORPORATION
150 East 42nd Street
New York New York 10017 (US)

(72) Inventor: La Pierre, Rene Bernard
53 Lions Drive
Morrisville, Pennsylvania 19067 Bucks (US)
Inventor: Gorring, Robert Lee
R.D.1
Washington Crossing Pennsylvania 18977 (US)

(74) Representative: Cooper, John Anthony
Mobil Court 3 Clements Inn
London WC2A 2EB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Sulfur- and nitrogen-containing hydrocarbon feed conversion and catalyst therefor

This invention relates to catalytic conversion of hydrocarbon feeds containing organic sulfur and organic nitrogen compounds as contaminants, and to a catalyst therefor.

Zeolitic materials, both natural and synthetic, have been demonstrated in the past to have catalytic properties for various types of hydrocarbon conversions. Certain zeolitic materials are ordered, porous crystalline aluminosilicates having a definite crystalline structure within which there are a large number of smaller cavities which may be interconnected by a number of channels. These cavities and channels are uniform in size. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen is 1:2. The electro-valence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. These aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), zeolite ZSM-5 (U.S. Patent 3,702,886), zeolite ZSM-11 (U.S. Patent 3,709,949), zeolite ZSM-12 (U.S. Patent 3,832,449) and zeolite ZSM-20 (U.S. Patent 3,972,983) merely to name a few.

A crystalline aluminosilicate zeolite well known in the art is faujasite. U.S.—A—3,269,934 describes a catalyst which comprises the magnesium form of zeolite Y, a synthetic faujasite, and palladium and its use in hydrocarbon conversion reactions. The ZSM-20 zeolite for use in the present invention resembles faujasite in certain aspects of structure, but has a notably higher silica/alumina ratio than faujasite.

The present invention relates to the use of a hydrogenation function containing synthetic crystalline zeolite ZSM-20, or the thermally treated products thereof, for sulfur- and nitrogen-containing organic compound, e.g. hydrocarbon compound conversion. The catalyst may be prepared by incorporating palladium and magnesium into ZSM-20.

When a hydrogenation component such as palladium is incorporated into the crystalline molecular sieve zeolite ZSM-20 a catalyst is produced which has the ability to

1) hydrogenate aromatic hydrocarbons at low pressure in the presence of sulfur and nitrogen poisons
2) convert sulfur and nitrogen containing poisons to $H_2S$ and $NH_3$ and saturated hydrocarbons
3) hydrocrack hydrocarbon mixtures containing sulfur and nitrogen poisons to lower molecular weight mixtures while substantially improving the quality of the material remaining in the original boiling range of the hydrocarbon mixture.

It is known that palladium and other Group VIII metals deposited on amorphous supports are unable to hydrogenate aromatic hydrocarbons at low pressure in the presence of sulfur and nitrogen poisons. In addition it is known (A. V. Agafonov et al. Khimiya i Tekhnologiya Topliv i Masel, No. 6 pp. 12—14, June, 1976) that Pd deposited on NaX, NaY, Na mordenite, KNaL, and KNa Erionite are also essentially inactive for the above mentioned conversion. We have also shown that the same applies to Pd/HZSM-12 and Rh H B.

Catalysts containing ZSM-20 are active and stable in hydrocracking at pressures of 3447.38—10342.14 kPa (500—1500 psi) and 287.77—371.11°C (500—700°F) whereas it is not uncommon for such hydrocracking processes to operate at 13785.52—20684.28 kPa (2000—3000 psi) and 343.33—426.66°C (650—800°F).

The original cations of the as synthesized ZSM-20 for use herein are replaced in accordance with techniques well known in the art, at least in part, by ion exchange with magnesium and palladium.

The zeolites for use herein may be formed in a wide variety of particle sizes. Generally speaking, the particles can be in the form of a powder, a granule, or a molded product, such as extrudate having a particle size sufficient to pass through a 2 mesh (Tyler) screen and be retained on a 400 mesh (Tyler) screen. In cases where the catalyst is molded, such as by extrusion, the aluminosilicate can be extruded before drying or dried or partially dried and then extruded.

As in the case of many catalysts, it may be desired to incorporate the zeolite with another material resistant to the temperatures and other conditions employed in organic compound conversion processes. Such matrix materials include active and inactive materials and synthetic or naturally occurring zeolites as well as inorganic materials such as clays, silica and/or metal oxides, such as alumina. The latter may be either naturally occurring or in the form of gelatinous precipitates, sols or gels including mixtures of silica and metal oxides. Use of a material in conjunction with the zeolite, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g. bentonite and kaolin. These materials, i.e., clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the synthetic zeolite catalysts include the montmorillonite and kaolin family, which families include the sub-bentonites, and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the present catalyst can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline zeolite, e.g. ZSM-20, and inorganic oxide gel matrix vary widely with the crystalline aluminosilicate content ranging from about 1 to about 90 percent by weight and more usually in the range of about 2 to about 70 percent by weight of the composite.

In general, organic compounds may be catalytically converted in the presence of the present zeolite catalyst material, including the product of thermal treatment thereof, over a range of catalytic conversion conditions, including a reaction temperature of from about 37.77°C (100°F) to about 648.88°C (1200°F) preferably from about 204.44°C (400°F) to about 537.77°C (1000°F) a reaction pressure of from atmospheric to about 69048.91 kPa (10,000 psig), preferably from about atmospheric to about 24232.98 kPa (3,500 psig) and a hydrogen/organic compound ratio of from 0 to about 3560 $m^3/m^3$, preferably from 0 to about 1780 $m^3/m^3$. When the conversion is conducted in a flow apparatus, e.g. a down-flow reactor, or under conditions comparable to those existing in a flow apparatus, the liquid hourly space velocity (LHSV) should be maintained at between about 0.1 $hr^{-1}$ and about 10 $hr^{-1}$. When the conversion is conducted in a batch apparatus, e.g. a stirred batch reactor, or under conditions comparable to those existing in a batch apparatus, the contact time should be maintained at between about 0.01 hour and about 48 hours, preferably between about 0.1 hour and about 24 hours.

In particular, when the conversion of organic compound by the present method is olefin polymerization, catalyst conversion conditions should be maintained within certain critical ranges, including a temperature of from about 37.77°C (100°F) to about 426.66°C (800°F) preferably from about 204.44°C (400°F) to about 315.55°C (600°F), a pressure of from about atmospheric to about 27680.36 kPa (4,000 psig), preferably from about atmospheric to about 13890.84 kPa (2,000 psig), a LHSV (when a flow operation) of from about 0.1 $hr^{-1}$ to about 50 $hr^{-1}$, preferably from about 1 $hr^{-1}$ to about 10 $hr^{-1}$, and a contact time (when a batch operation) of from about 0.1 hour to about 48 hours, preferably from about 0.5 hour to about 24 hours and a hydrogen/hydrocarbon (i.e. olefin) ratio of from about 8.9 $m^3/m^3$ to about 1780 $m^3/m^3$ preferably from about 89 $m^3/m^3$ to about 890 $m^3/m^3$.

When the conversion is olefin or paraffin aromatization, catalyst conversion conditions should be maintained within critical ranges, including a temperature of from about 315.55°C (600°F) to about 648.88°C (1200°F), preferably from about 426.66°C (800°F) to about 537.77°C (1000°F), a pressure of from about 446.07 kPa (50 psig) to about 69048.91 kPa (10,000 psig), preferably from about 790.8 kPa (100 psig) to about 6996.09 kPa (1,000 psig), a LHSV (when a flow operation) of from about 0.1 $hr^{-1}$ to about 10 $hr^{-1}$, preferably from about 1 $hr^{-1}$ to about 5 $hr^{-1}$, a contact time (when a batch operation) of from about 0.1 hour to about 48 hours, preferably from about 1 hour to about 24 hours and a hydrogen/hydrocarbon (i.e. olefin or paraffin) ratio of from about 8.9 $m^3/m^3$ to about 1780 $m^3/m^3$, preferably from about 17.8 $m^3/m^3$ to about 178 $m^3/m^3$.

Further, when the conversion of organic compound by the present method is cracking, catalytic conversion conditions should be maintained within certain critical ranges, including a temperature of from about 371.11°C (700°F) to about 648.88°C (1200°F) preferably from about 426.66°C (800°F) to about 537.77°C (1000°F) a pressure of from about atmospheric to about 1480.28 kPa (200 psig), a LHSV (when a flow operation) of from about 0.5 $hr^{-1}$ to about 50 $hr^{-1}$, preferably from about 1 $hr^{-1}$ to about 10 $hr^{-1}$, and a contact time (when a batch operation) of from about 0.01 hour to about 24 hours, preferably from about 0.1 hour to about 10 hours. When the conversion is hydrocracking, catalyst conversion conditions should be maintained within somewhat different ranges, including a temperature of from about 204.44°C (400°F) to about 537.77°C (1000°F) preferably from about 260°C (500°F) to about 454.44°C (850°F) a pressure of from about 3548.7 kPa (500 psig) to about 24232.98 kPa (3500 psig), a LHSV (when a flow operation) of from about 0.1 $hr^{-1}$ to about 10 $hr^{-1}$, preferably from about 0.2 $hr^{-1}$ to about 5 $hr^{-1}$, a contact time (when a batch operation) of from about 0.1 hour to about 10 hours, preferably from about 0.2 hour to about 5 hours and a hydrogen/hydrocarbon ratio of from about 178 $m^3/m^3$ to about 3560 $m^3/m^3$ preferably from about 534 $m^3/m^3$ to about 1780 $m^3/m^3$.

In order to more fully illustrate the nature of the invention and the manner of practicing same, the following non-limiting examples are presented.

Example 1

A mixture of

193.7 gm Tetraethylorthosilicate
7.9 gm Sodium Aluminate
291 ml 2.8N Tetraethylammonium hydroxide and
72 gm Water

which gives the following mole ratios

$SiO_2/Al_2O_3 = 30$
$H_2O/SiO_2 = 15$
$OH/SiO_2 = 0.90$
$Na/SiO_2 = 0.09$ and
$TEA/SiO_2 = 0.88$

was aged for 3 days at 25°C in a 300 ml polypropylene bottle and then crystallized for an additional 18 days at 100°C under static conditions to give crystalline ZSM-20 in 90% purity with a $SiO_2/Al_2O_3$ mole ratio of 8.66.

Example 2

5% Pd/Mg/ZSM-20

The TEA, Na ZSM-20 was exchanged with 1 molar $MgCl_2$ at reflux overnight, washed until free of $Cl^-$, and air dried at 120°C. The magnesium exchanged ZSM-20 was then reslurried in distilled $H_2O$, an aqueous solution of $Pd(NH_4)_4Cl_2$ was added dropwise, stirred overnight at 40°C, washed free of $Cl^-$, air dried at 140°C, and then air calcined at 500°C for four hours. Elemental analysis of the calcined catalyst showed that Pd exchange was quantitative.

A product was obtained having the oxide composition:

5% Pd/Mg/ZSM-20

|  | wt % | meq/gm |  |
|---|---|---|---|
| PdO | 6.2 | 1.0 |  |
| MgO | 3.3 | 1.6 | 3.24 |
| $Na_2O$ | 1.98 | 0.64 |  |
| $SiO_2$ | 74.00 |  |  |
| $Al_2O_3$ | 14.50 | 2.84 |  |
| $SiO_2/Al_2O_3 = 8.66$ |  |  |  |

Example 3 (comparative)

5% Pd/Mg/dealuminized Y.

500.3 gm (2068 meq Al) of Na Y ($SiO_2/Al_2O_3 = 4.9$) was slurried in 1300 ml deionized $H_2O$. 233.07 gm (692 meq) $Na_2$ EDTA was added and the slurry heated to reflux while stirring. 262 ml 5N HCl (1310 meq $H^+$) was added to the refluxing stirred slurry at a rate of 3.4 ml/hr so as to remove 31.7% of the framework aluminum and give a $SiO_2/Al_2O_3$ ratio of 7.1. Elemental analysis of the dealuminized material gave a $SiO_2/Al_2O_3$ ratio of 6.8 and Na/Al ratio of 0.96 indicating the presence of some non-framework aluminum. The dealuminized sample was found to be 86% crystalline when compared to the original Na Y starting material.

50 gm of the dealuminized Na Y was exchanged 3 times (4, 22, 4 hours) with 300 ml 1N $MgCl_2$ at reflux, given an intermediate calcination at 500°C and given one additional exchange treatment for 4 hours using the same procedure. Elemental analysis showed that 73% of the Na had been exchanged by Mg.

15 gm of the Mg exchanged-dealuminized Y was then slurried in 100 ml deionized $H_2O$ and a 50 ml aqueous solution containing 0.75 gm Pd as $Pd(NH_3)_4^{++}$ was added dropwise and stirred for 20 hours @ 60°C.

The Pd exchanged material was washed until free of $Cl^-$, dried at 120°C and calcined at 500°C for 4 hours. The calcined catalyst contained 5.2% Pd, was tan in color, and showed no evidence of metallic Pd by X-ray.

A product was obtained having the oxide composition:

5% Pd/Mg/dealuminized Y

| | wt % | meq*/gm | |
|---|---|---|---|
| PdO | 5.9 | 0.98 | |
| MgO | 3.25 | 1.62 | 3.52 |
| Na$_2$O | 2.84 | 0.92 | |
| SiO$_2$ | 71.1 | | |
| Al$_2$O$_3$ | 16.9 | 3.34 | |
| SiO$_2$/Al$_2$O$_3$=7.15 | | | |

* Milliequivalents of ionic species per gram of dehydrated catalyst.

Examples 4—6

Tetralin containing 700 parts per million S as benzothiophene was converted over the above catalysts and Ht-500E, a commercially available hydrotreating catalyst which was used as a control in this work. The results obtained are summarized below.

| Catalyst | Example 4 Pd/Mg/ZSM-20 | | Example 5 (comparative) Pd/Mg/DalY | Example 6 Ht-500E (comparative) NiMo/Al$_2$O$_3$ |
|---|---|---|---|---|
| T°C | 237.77 (460°F) | 248.88 (480°F) | 260 (500°F) | 315.55 (600°F) |
| LHSV | 1.0 | 1.0 | 1.0 | 1.0 |
| Pressure | 3447.38 kPa (500 psia) | 3447.38 kPa (500 psia) | 3447.38 kPa (500 psia) | 3447.38 kPa (500 psia) |
| Tetralin Conv. % wt. | 94 | 100 | 100 | 11 |
| Decalin Select. % wt. | 80 | 55 | 79 | 70 |
| C$_{10}$ Select. % wt. | >95 | >95 | >95 | 100 |

From the above data it is obvious that the ZSM-20 based catalyst is more active than the catalyst based on dealuminized Y (the best known catalyst of prior art) and is much more active than the commercial NiMo/Al₂O₃ catalyst.

Examples 7—9

Identical experiments were performed except that 500 parts per million N as quinoline was added to the sulfur-containing feed with the following results:

| | Example 7 | Example 8 (comparative) | Example 9 Ht-500 (comparative) |
|---|---|---|---|
| Catalyst | Pd/Mg/ZSM-20 | Pd/Mg/DalY | NiMo/Al₂O₃ |
| T°C | 329.44 (625°F) | 329.44 (625°F) | 332.22 (630°F) |
| LHSV | 1 | 1 | 1 |
| Pressure | 5171.07 kPa 750*psia) | 3447.38 kPa (500 psia | 3447.38 kPa (500 psia) |
| Tetralin Conv. % wt. | 75 | 30 | 13 |
| Decalin Select. % wt. | 68 | 86 | 61 |
| C₁₀ Select. % wt. | 99 | >95 | 100 |

Again the ZSM-20 catalyst was the most active. *Increasing pressure from 3447.38 kPa (500 psi) to 5171.07 kPa (750 psi) has a significant activating effect.

Examples 10—12

As further examples, a 246.11—385°C (475—725°F) Arab Light gas oil containing 1.09% S, 60 ppm N and 13.32% H, was reacted over the three catalysts at 1.0 LHSV, 5171.07 kPa (750 psi), and 1068 m³/m³ H₂ with the following results:

| | Example 10 | Example 11 (comparative) | Example 12 Ht-500 (comparative) |
|---|---|---|---|
| Catalyst | Pd/Mg/ZSM-20 | Pd/Mg/DalY | NiMo/Al₂O₃ |
| Time on Stream (Hrs.) | 450 | 210 | 215 |
| T°C | 315.55 (600°F) | 335 (635°F) | 342.22 (648°F) |
| 420+ Conversion % wt. | 29.7 | 31.7 | <1 |
| %H in C₅⁺ Prod. | 14.39 | 14.30 | 13.85 |
| %S in C₅⁺ Prod. | .002 | .12 | .07 |

In this case the zeolite catalysts were able to produce products containing much more hydrogen than those produced over the NiMo/Al₂O₃ catalyst. Again, the ZSM-20 based catalyst was more active than that based on dealuminized Y.

**Claims**

1. A process for effecting catalytic conversion of an organic charge containing organic sulfur and/or organic nitrogen compounds as contaminants which comprises contacting said charge under catalytic conversion conditions with a catalyst comprising the magnesium form of a synthetic crystalline zeolite in association with palladium, characterised in that the zeolite is ZSM-20.

2. A process according to Claim 1 wherein the palladium comprises between 0.1 and 10.0 wt.% of the catalyst.

3. A process according to claim 1 or 2 wherein said catalyst conversion is conducted in a continuous flow apparatus and said conversion conditions include a temperature of 37.77°C (100°F) to 648.88°C (1200°F), a pressure of atmospheric to 69048.91 kPa (10,000 psig), a hydrogen/organic compound ratio of 0 to 3560 m³/m³ and a liquid hourly space velocity of 0.1 hr⁻¹ to 50 hr⁻¹.

4. A process according to claims 1 or 2 wherein said catalytic conversion is conducted in a batch apparatus and said conversion conditions include a temperature of 37.77°C to (100°F) to 648.88°C (1200°F), a pressure of atmospheric to 69048.91 kPa (10,000 psig), a hydrogen/organic compound ratio of 0 to 3560 m³/m³ and a contact time of 0.01 hour to 48 hours.

5. A process according to Claim 3 wherein said conversion is olefin polymerization and said conversion conditions include a temperature of 37.77°C (100°F) to 426.66°C (800°F), a pressure of atmospheric to 27680.36 kPa (4,000 psig) and a hydrogen/hydrocarbon ratio of 8.9 m³/m³ to 1780 m³/m³ and a liquid hourly space velocity of 0.1 hr⁻¹ to 50 hr⁻¹.

6. A process according to Claim 4 wherein said conversion is olefin polymerization and said conversion conditions include a temperature of 37.77°C (100°F) to 426.66°C (800°F) a pressure of atmospheric to 27680.36 kPa (4000 psig), a hydrogen/hydrocarbon ratio of 8.9 m³/m³ to 1780 m³/m³ and a contact time of 0.1 hour to 48 hours.

7. A process according to Claim 3 wherein said conversion is aromatization and said conversion conditions include a temperature of 315.55°C (600°F) to 648.88°C (1200°F), a pressure of 446.07 kPa (50 psig) to 69048.91 kPa (10,000 psig), a hydrogen/hydrocarbn ratio of 8.9 m³/m³ to 1780 m³/m³ and a liquid hourly space velocity of 0.1 hr⁻¹ to 10 hr⁻¹.

8. A process according to Claim 4 wherein said conversion is aromatization and said conversion conditions include a temperature of 315.55°C (600°F) to 648.88°C (1200°F), a pressure of 446.07 kPa (50 psig) to 69048.91 kPa (10,000 psig) a hydrogen/hydrocarbon ratio of 8.9 m³/m³ to 1780 m³/m³ and a contact time of 0.1 hour to 48 hours.

9. A process according to Claim 3 wherein said conversion is cracking and said conversion conditions include a temperature of 371.11°C (700°F) to 648.88°C (1200°F), a pressure of atmospheric to 1480.28 kPa (200 psig) and a liquid hourly space velocity of 0.5 hr⁻¹ to 50 hr⁻¹.

10. A process according to Claim 4 wherein said conversion is cracking and said conversion conditions include a temperature of 371.11°C (700°F) to 648.88°C (1200°F), a pressure of atmospheric to 1480.28 kPa (200 psig) and a contact time of 0.01 hour to 24 hours.

11. A process according to Claim 3 wherein said conversion is hydrocracking and said conversion conditions include a temperature of 204.44°C (400°F) to 537.77°C (1000°F), a pressure of 3548.7 kPa (500 psig) to 24232.98 kPa (3500 psig), a hydrogen/hydrocarbon ratio of 356 m³/m³ and a liquid hourly space velocity of 0.1 hr⁻¹ to 10 hr⁻¹.

12. A process according to Claim 4 wherein said conversion is hydrocracking and said conversion conditions include a temperature of 204.44°C (400°F) to 537.77°C (1000°F), a pressure of 3548.7 kPa (500 psig) to 24232.98 kPa (3500 psig), a hydrogen/hydrocarbon ratio of 178 m³/m³ to 3560 m³/m³ and a contact time of 0.1 hour to 10 hours.

13. A catalyst composition comprising the magnesium form of a crystalline synthetic zeolite in association with palladium, characterized in that the zeolite is ZSM-20.

14. A composition according to claim 13 whereof palladium constitutes between 0.1 and 10% wt.

**Patentansprüche**

1. Verfahren zur Ausführung Katalytischer Umwandlung von einem organischen einsatzmaterial, enthaltend organische Schwefel- und/oder organische Stickstoffverbindungen als Verunreinigungen, wobei das Einsatzmaterial unter katalytischen Umwandlungsbedingungen mit einem Katalysator in Berührung gebracht wird, der die Magnesiumform von einem synthetischen kristallinen Zeolithen in Verbindung mit Palladium enthält, dadurch gekennzeichnet, daß der Zeolith ZSM-20 ist.

2. Verfahren nach Anspruch 1, dadurch gekennzeichnet, daß das Palladium zwischen 0,1 und 10,0 Gew.-% von dem Katalysator umfaßt.

3. Verfahren nach Anspruch 1 oder 2, dadurch gekennzeichnet, daß die katalytische Umwandlung in einer Anlage für kontinuierlichen Fluß ausgeführt wird und die Umwandlungsbedingungen eine Temperature von 37,77°C (100°F) bis 648,88°C (1200°F), einen Druck von Atmosphärendruck bis 69 048,91 kPa (10 000 psig), ein Wasserstoff/Organoverbindung-Verhältnis von 0 bis 3 560 m³/m³ und eine stündliche Flüssigkeits-Raumströmungsgeschwindigkeit von 0,1 h⁻¹ bis 50 h⁻¹ einschließen.

4. Verfahren nach den Ansprüchen 1 oder 2, dadurch gekennzeichnet, daß die katalytische Umwandlung in einer Chargen-Anlage ausgeführt wird und die Umwandlungsbedingungen eine Temperatur von 37,77°C (100°F) bis 648,88°C (1200°F), einen Druch von Atmosphärendruck bis 69 048,91 kPa (10 000 psig), ein Wasserstoff/Organoverbindung-Verhältnis von 0 bis 3 560 m³/m³ und eine Verweilzeit von 0.01 h bis 48 h einschließen.

5. Verfahren nach Anspruch 3, dadurch gekennzeichnet, daß die Umwandlung eine Olefinpolymerisation ist und die Umwandlungsbedingungen eine Temperatur von 37,77°C (100°F) bis 426,66°C (800°F), einen Druch von Atmosphärendruck bis 27 680,36 kPa (4 000 psig), ein Wasserstoff/Kohlenwasserstoff-Verhältnis von 8,9 m³/m³ bis 1 780 m³/m³ und eine stühdliche Flüssigkeits-Raumströmungsgeschwindigkeit von 0,1 h⁻¹ bis 50 h⁻¹ einschließen.

6. Verfahren nach Anspruch 4, dadurch gekennzeichnet, daß die Umwandlung eine Olefinpolymerisation ist und die Umwandlungsbedingungen eine Temperatur von 37,77°C (100°F) bis 426,66°C (800°F), einen Druck von Atmosphärendruck bis 27 680,36 kPa (4000 psig), ein Wasserstoff/Kohlenwasserstoff-Verhältnis von 8,9 m³/m³ bis 1 780 m³/m³ und eine Kontaktzeit von 0,1 h bis 48 h einschließen.

7. Verfahren nach Anspruch 3, dadurch gekennzeichnet, daß die Umwandlung eine Aromatisierung ist und die Umwaldlungsbedingungen eine Temperatur von 315,55°C (600°F) bis 648,88°C (1200°F), einen Druck von 446,07 kPa (50 psig) bis 69 048,91 kPa (10 000 psig), ein Wasserstoff/Kohlenwasserstoff-Verhältnis von 8,9 m³/m³ bis 1 780 m³/m³ und eine stündliche Flüssigkeits-Raumströmungsgeschwindigkeit von 0,1 h⁻¹ bis 10 h⁻¹ einschließen.

8. Verfahren nach Anspruch 4, dadurch gekennzeichnet, daß die Umwandlung eine Aromatisierung ist und die Umwandlungsbedingungen eine Tempertaur von 315,55°C (600°F) bis 648,88°C (1200°F), einen Druck von 446,07 kPa (50 psig) bis 69 048,91 kPa (10 000 psig) ein Wasserstoff/Kohlenwasserstoff-Verhältnis von 8,9 m³/m³ bis 1 780 m³/m³ und eine Kontaktzeit von 0,1 h bis 48 h einschließen.

9. Verfahren nach Anspruch 3, dadurch gekennzeichnet, daß die Umwandlung Crackung ist und die Umwandlungsbedingungen eine Temperatur von 371,11°C (700°F) bis 648,88°C (1200°F), einen Druck von Atmosphärendruck bis 1 480,28 kPa (200 psig) und eine stündliche Flüssigkeits-Raumströmungsgeschwindigkeit von 0,5 h⁻¹ bis 50 h⁻¹ einschließen.

10. Verfahren nach Anspruch 4, dadurch gekennzeichnet, daß die Umwandlung Crackung ist und die Umwandlungsbedingungen eine Temperatur von 371,11°C (700°F) bis 648,88°C (1200°F), einen Druck von Atmosphärendruck bis 1 480,28 kPa (200 psig) und eine Verweilzeit von 0.01 h bis 24 h einschließen.

11. Verfahren nach Anspruch 3, dadurch gekennzeichnet, daß die Umwandlung Hydrocrackung ist und die Umwandlungsbedingungen eine Temperatur von 204,44°C (400°F) bis 537,77°C (1000°F), eine Druck von 3 548,7 kPa (500 psig) bis 24 232,98 kPa (3 500 psig), ein Wasserstoff/Kohlenwasserstoff-Verhältnis von 356 m³/m³ und eine stündliche Flüssigkeits-Raumströmungsgeschwindigkeit von 0,1⁻¹ bis 10⁻¹ einschließen.

12. Verfahren nach Anspruch 4, dadurch gekennzeichnet, daß die Umwandlung Hydrocrackung ist und die Umwandlungsbedingungen eine Temperatur von 204,44°C (400°F) bis 537,77°C (1000°F), einen Druck von 3 548,7 kPa (500 psig) bis 24 232,98 kPa (3500 psig), ein Wasserstoff/Kohlenwasserstoff-Verhältnis von 178 m³/m³ bis 3 560 m³/m³ und eine Kontaktzeit von 0,1 h bis 10 h einschließen.

13. Katalysatorzusammensetzung, enthaltend die Magnesiumform von einem kristallinen synthetischen Zeolithen in Verbindung mit Palladium, dadurch gekennzeichnet, daß der Zeolith ZSM-20 ist.

14. Zusammensetzung nach Anspruch 13, wobei Palladium zwischen 0,1 und 10 Gew.-% darstellt.

**Revendications**

1. Un procédé pour réaliser une conversion catalytique d'une charge organique renfermant des composés sulfurés organiques et/out azotés organiques comme contaminants, selon lequel on met en contact ladite charge sous des conditions de conversion catalytique avec un catalyseur comprenant la forme de magnésium d'une zéolite cristalline synthétique en association avec du palladium, caractérisé en ce que la zéolite est le ZSM-20.

2. Un procédé selon la revendication 1, dans lequel le palladium est présent entre 0,1 à 10,0% en poids dans le catalyseur.

3. Un procédé selon la revendication 1 ou 2, dans lequel ladite conversion catalytique est réalisée dans un appareil à écoulement continu et lesdites conditions de conversion comportent une température de 37,77°C à 648,88°C, une pression atmosphérique à 69048,91 kPa, un rapport hydrogène/composés organiques de 0 à 3560 m³/m³ et une vitesse spatiale horaire du liquide de 0,1 h⁻¹ à 50 h⁻¹.

4. Un procédé selon les revendications 1 à 2, dans lequel ladite conversion catalytique est réalisée dans un appareil à charge dosée et les conditions de conversions comportent une température de 37,77°C à 648,88°C une pression atmosphérique à 69048,91 kPa, un rapport hydrogène/composés organiques de 0 à 3560 m³/m³ et un temps de contact de 0,01 h à 48 h.

5. Un procédé selon la revendication 3, dans lequel ladite conversion est une polymérisation oléfinique et lesdites conditions de conversion comportent une température de 37,77°C à 426,66°C, une pression d'atmosphérique à 27680,36 kPa, un rapport hydrogène/hydrocarbone de 8,9 m³/m³ à 1780 m³/m³ et une vitesse spatiale horaire liquide de 0,1 h⁻¹ à 50 h⁻¹.

6. Un procédé selon la revendication 4, dans lequel ladite conversion est une polymérisation oléfinique et lesdites conditions de conversion comportant une température de 37,77°C à 426,66°C, une pression de l'atmosphérique à 27680,36 kPa, un rapport hydrogène/hydrocarbone de 8,9 m³/m³ à 1780 m³/m³ et un temps de contact de 0,1 h à 48 h.

7. Un procédé selon la revendication 3, dans lequel la conversion est l'aromatisation et lesdites conditions de conversion comportent une température de 315,55°C à 648,88°C, une pression de 446,07 kPa à 69048,91 kPa, un rapport hydrogène/hydrocarbone de 8,9 m³/m³ à 1780 m³/m³ et une vitesse spatiale horaire du liquide de 0,1 h⁻¹ à 10 h⁻¹.

8. Un procédé selon la revendication 4, dans lequel ladite conversion est l'aromatisation et lesdites conditions de conversion comportent une température de 315,55°C à 648,88°C, une pression de 446,07 kPa à 69048,91 kPa, un rapport hydrogène/hydrocarbone de 8,9 m³/m³ à 1780 m³/m³ et un temps de contact de 0,1 h à 48 h.

9. Un procédé selon la revendication 3, dans lequel ladite conversion et le craquage et les conditions de conversion comportent une température de 371,11°C à 648,88°C, une pression de l'atmosphérique à 1480,28 kPa et une vitesse spatiale horaire de liquide à 0,5 h⁻¹ à 50 h⁻¹.

10. Un procédé selon la revendication 4, dans lequel ladite conversion est un craquage et lesdites

## 0014291

conditions de conversion comportent une température de 371,11°C à 648,88°C, une pression de l'atmosphérique à 1480,28 kPa et un temps de contact de 0,01 h à 24 h.

11. Un procédé selon la revendication 3, dans lequel ladite conversion est un hydrocraquage et les conditions de conversion comporte une température de 204,44°C à 537,77°C, une pression de 3548,7 kPa à 24232,98 kPa, un rapport hydrogène/hydrocarbone de 356 m³/m³ et une vitesse spatiale horaire du liquide de 0,1 h⁻¹ à 10 h⁻¹.

12. Un procédé selon la revendication 4, dans lequel ladite conversion est un hydrocraquage les conditions de conversion comportent une température de 204,44°C à 537,77°C, une pression de 3548,7 kPa à 24232,98 kPa, un rapport hydrogène/hydrocarbone de 178 m³/m³ à 3560 m³/m³ et un temps de contact de 0,1 h à 10 h.

13. Une composition catalytique comportant la forme magnésium d'une zéolite cristalline synthétique en association avec du palladium, caractérisée en ce que cette zéolite est le ZSM-20.

14. Une composition selon la revendication 13, dont le palladium constitue entre 0,1 et 10% en poids.